# EUROPEAN PATENT APPLICATION

(11) **EP 2 040 412 A1**
(43) Date of publication of application: **25.03.2009**
(21) Application number: 07018500.4
(22) Date of filing: 20.09.2007
(51) Int. Cl.: H04L 12/14

(54) **Method and system for data transmission**

(71) Applicant: Nokia Siemens Networks Oy, 02610 Espoo (FI)
(72) Inventor: Kühne, Ralph, 71679 Asperg (DE); Reimer, Uve, 12683 Berlin (DE); Schläger, Morten, Dr., 14059 Berlin (DE)
(74) Representative: Bruglachner, Thomas E.

(57) **Abstract**

The invention relates to a method and system for data transmission. According to the method, data to be transmitted is determined. Size information relating to the size of the data, data transmission price information, and a budget for the data transmission are provided. Based on these pieces of information, a relationship between the size information and the budget as well as a data transmission behaviour are determined.

## Description

The present invention relates to a method and system for data transmission.

In general, Internet-based data services offered in mobile communication networks are charged volume-based and not transaction-based. For subscribers that are subject to a budget limit or that are prepaid customers, this possibly means that a started session, e. g. file transfer, video streaming, etc., is not completely carried out as they run out of budget during the session, whereas the costs for the incomplete and therefore useless downloaded data is nevertheless charged. The likelihood of such limit-based transmission abortions increases with the increasing use of data services in mobile communication networks.

From the prior art, it is known to warn a subscriber, when his available prepaid budget falls below a predetermined threshold. Furthermore, automatic recharging mechanisms and subscriber-specific credit lines are known. From information technology, it is known to first check if the available space in a target storage is sufficient to store a specific file, before this file is copied onto the target storage.

It is an object of the present invention to provide an improved method and system for data transmission.

This object is accomplished by the independent claims.
Preferred embodiments are specified by the dependent claims.

The invention provides a method for data transmission that may comprise the steps of determining data to be transmitted, providing size information relating to the size of said data, providing data transmission price information, providing a budget for data transmission, determining a relationship between said size information and said budget based on said data transmission price information, and determining a data transmission behaviour based on the determined relationship.

This method has the advantage that the size of the data to be transmitted is put into relation with the available budget, taking into account the price for data transmission. Based on this relationship, it can be determined, for example, if the budget is sufficient to transmit the complete data. If the budget is not sufficient, it may be, for example, decided that the data is not transmitted at all, such that the subscriber is not charged for a useless transmission of data.

In a preferred embodiment, the method comprises the step of providing size information based on an analysis of a control message for controlling the transmission of data. This step is especially advantageous, if the size of the data is transmitted as a part of the transmission protocol at the beginning of the data transmission. In this way, the control message can be analyzed and the size information may be extracted from the data stream.

In a preferred embodiment, the step of providing size information comprises the step of requesting size information from a server providing the data to be transmitted. This step is advantageous if the server providing the data to be transmitted is aware of the size of the data.

In a preferred embodiment, the step of providing size information comprises the step of analyzing the data to be transmitted for determining size information. This step is especially advantageous if the size of the data cannot be simply determined by analyzing a control message or by requesting the size information at the server. In this case, this step allows to determine the size of the data to be transmitted nevertheless.

In a preferred embodiment, the step of providing size information comprises the steps of transmitting said data to be transmitted to a buffer, buffering said data in said buffer, and analyzing the buffered data for determining size information. These steps have the advantage that the server providing the data to be transmitted does not need to be modified. The data stream provided by the server may be simply buffered and afterwards, the buffered data is analyzed to determine the size of the data.

Preferably, the step of determining a relationship between said size information and said budget based on said data transmission price information is a step of determining whether the budget is sufficient to transmit said data. The sufficiency of the budget may be determined, for example, by the steps of determining transmission costs of said data based on said size information and said data transmission price information, and comparing said transmission costs with said budget. With these steps, it can be easily found out whether the subscriber will receive a complete file if the transmission of the data is carried out.

Preferably, the method according to the invention comprises the step of reserving at least a part of the budget for the transmission of said data. With this reservation, a situation is addressed where a subscriber requests two data items, each data item being small enough to be transmitted with the available budget, but both data items in sum being too large to be transmitted with the available budget. In this situation, without a reservation of budget, it may happen that both transmissions are initiated and at least one is aborted before completion, due to a lack of budget. This effect is prevented by reserving at least a part of the budget for the transmission of said data.

Preferably, the step of determining a data transmission behaviour based on the determined relationship is a step of deciding to not transmit said data if the budget is not sufficient for transmitting said data. This has the advantage that the subscriber is not charged for the transmission of incomplete and therefore useless data.

In a preferred embodiment, the step of determining a data transmission behaviour based on the determined relationship comprises the step of informing a user requesting said data to be transmitted about the determined relationship. It may be offered to the user to decide to not transmit the requested data, to increase his budget, or to have said data partially transmitted. This gives the user several options for reacting to an insufficient budget.

The method according to the invention may have the advantage that the customers' satisfaction is improved and the credit control is optimized (no re-authorisation/no quota-rerequest during the download).

Furthermore, the invention comprises a system for data transmission, that may comprise means for determining data to be transmitted, means for providing size information relating to the size of said data, means for providing data transmission price information, means for providing a budget for data transmission, means for determining a relationship between said size information and said budget based on said data transmission price information, and means for determining a data transmission behaviour based on the determined relationship.
This system has the advantage that a data transmission behaviour can be determined based on a relationship between the size information and the budget.

In a preferred embodiment, the means for providing size information comprise means for providing size information based on an analysis of a control message for controlling the transmission of data. These means allow to provide the size information efficiently if the size information can be determined based on an analysis of a control message.

Preferably, the means for providing size information comprise means for requesting size information from a server providing the data to be transmitted. These means allow to easily request the size information at the server, in case the server is aware of this size information.

In a preferred embodiment, the means for providing size information comprise means for analyzing the data to be transmitted for determining size information. These means allow to determine the size information if it cannot be determined based on an analysis of a control message or based on a request at a server.

In a preferred embodiment, the means for providing size information comprise means for transmitting said data to be transmitted to a buffer, means for buffering said data in said buffer, and means for analyzing the buffered data for determining size information. These means have the advantage that the size information can be found out without a need to modify the server and without any cooperation from the side of the server.

Preferably, the means for determining a relationship comprise means for determining whether the budget is sufficient to transmit said data. Preferably, the means for determining a relationship comprise means for determining transmission costs of said data based on said size information and said data transmission price information, and means for comparing said transmission costs with said budget. With these means, it can be easily determined how much it costs to transmit the data and to compare these costs with the available budget.

Preferably, the system comprises means for reserving at least a part of the budget for the transmission of said data. Due to these means, the system is able to reserve budget, such that in the case of multiple data transmission sessions it is assured that every further session is only admitted if it can be completed with the budget that is still available after the reservation.

Preferably, the means for determining a data transmission behaviour comprise means for deciding to not transmit said data if the budget is not sufficient for transmitting said data. These means efficiently ensure that no session is started that will have to be aborted uncompleted due to an insufficient budget. In this way, it is prevented that the subscriber has to pay for incomplete and therefore useless data.

In a preferred embodiment, the means for determining a data transmission behaviour comprise means for informing a user requesting said data to be transmitted about the determined relationship. The means for determining a data transmission behaviour may further comprise means for offering the user to increase his budget and/or means for offering the user a partial transmission of said data. Furthermore, the means for determining a data transmission behaviour may comprise means for offering the user to decide that said data is not transmitted. These means allow to inform the user about the determined relationship between the size information and the budget and allow the user to decide based on this relationship, whether the data should not be transmitted, whether it should be transmitted partially, or whether the budget should be increased.

Preferably, the method according to the invention is implemented using software. Likewise, the system according to the invention may be implemented with a plurality of software components. Thus, the invention comprises a computer program product comprising a computer readable medium and a computer program recorded therein in form of a series of state elements corresponding to instructions which are adapted to be processed by a data processing means of a data processing apparatus, such that a method according to the invention is performed, or a system according to the invention is formed on the data processing means.

Preferred embodiments and further details of the present invention will be described in the following with reference to the figures.

Fig. 1 shows one embodiment of the method for data transmission according to the invention.

Fig. 2 shows one embodiment of a system for data transmission according to the invention.

Fig. 3 shows another embodiment of the method for data transmission according to the invention.

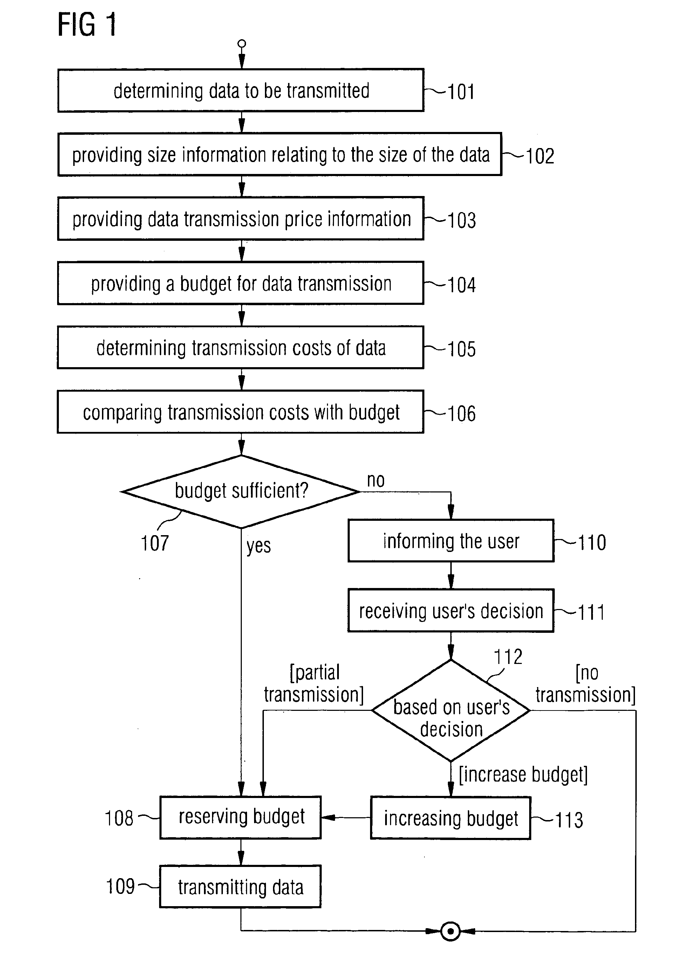

Fig. 1 illustrates one embodiment of the method for data transmission according to the invention. In step 101, it is determined which data is to be transmitted. This may be done, for example, by a user who browses a web page and clicks on a link to initiate the download of a certain file.

In step 102, size information relating to the size of the data is provided. The size information may be, for example, determined by an analysis of a control message that is sent from the server at the beginning of the transmission of the data. Alternatively, a request for size information may be sent to the server, or the data to be transmitted may be analyzed.

In step 103, data transmission price information is provided. This price information may, for example, specify a price in EUR per Kilo-Byte of data. A budget for data transmission is provided in step 104. The budget may be, for example, the account balance of a prepaid account of a subscriber.

In step 105, transmission costs of the data are determined. This may be done, for example, by multiplying the size of the data with the data transmission price information. In step 106, these transmission costs are compared with the budget.

In step 107, it is determined whether the budget is sufficient for the transmission of the data. If it is sufficient, budget is reserved accordingly in step 108, and the data is transmitted in step 109. If the budget is insufficient, the user is informed about this insufficiency in step 110 and is prompted to decide what to do. In step 111, the user's decision is received accordingly. Based on the user's decision, the according actions are triggered. If the user decides that he wants the data to be partially transmitted, the method proceeds to step 108. If the user decides that no transmission should take place, the method ends. In case that the user decides to increase his budget, this is done in step 113 and the method proceeds to step 108.

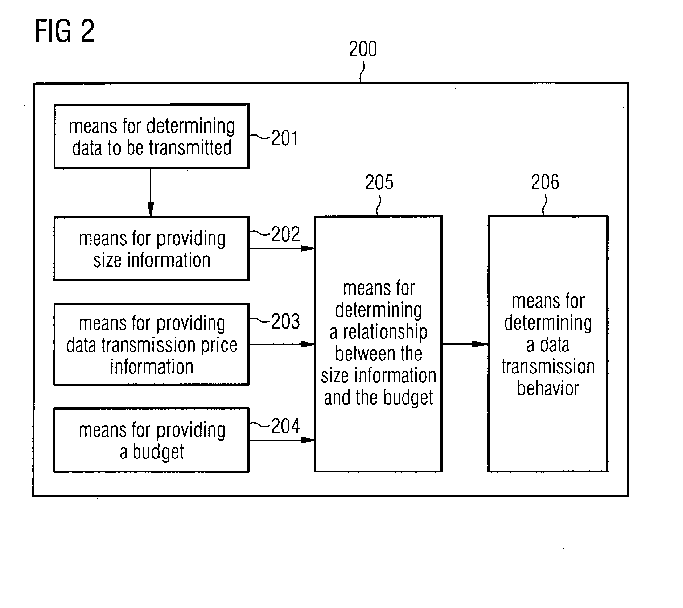

Fig. 2 illustrates one embodiment of a system for data transmission according to the invention. The system 200 comprises means for determining data to be transmitted 201. Means for providing size information 202, also comprised in the system 200, provide information about the size of the data to be transmitted. The system 200 further comprises means for providing data transmission price information 203 and means for providing a budget for data transmission 204. Based on the information provided by the means 202 - 204, means for determining a relationship between the size information and the budget 205 determine the relationship accordingly. Based on the determined relationship, means for determining a data transmission behaviour 206 determine a data transmission behaviour.

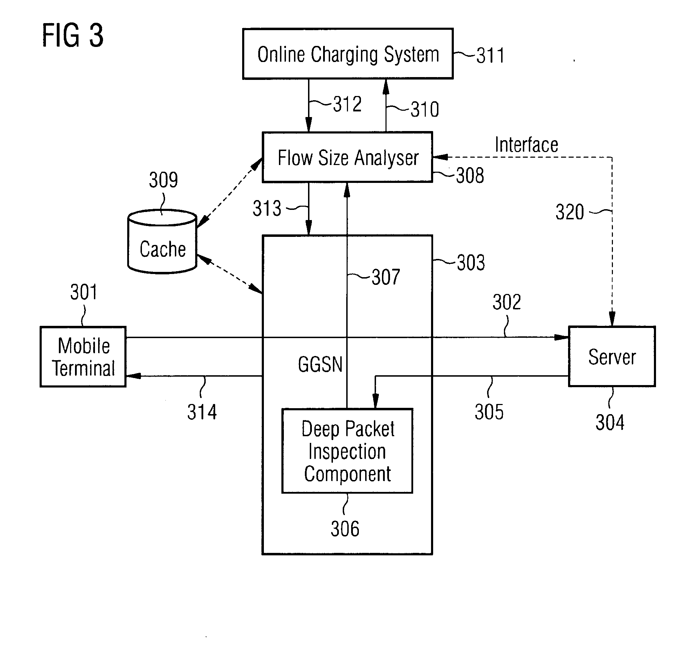

Fig. 3 shows another embodiment of the method and system according to the invention. A starting point is a mobile terminal 301 with an active PDP-context (packet data protocol-context) for the Internet access. In step 302, the mobile terminal 301 initiates a new data transfer, e. g. HTTP or FTP. The data transfer request is routed from the mobile network via a GGSN (gateway GPRS support node) to a server 304.

The server 304 may be within the same network as the mobile terminal 301, which means that the server is under the control of the same provider as the mobile network, or the server 304 may be in a different domain, such that the provider of the mobile network does not have any control over the server. Such a server may be, for example, the FTP server of an Internet provider. The messages between the mobile terminal 301 and the server 304 for the establishment of the connection (TCP SYN, SYN-ACK, ACK) as well as the application request (e. g. HTTP-GET) are transmitted via the existing PDP-context.

In step 305, the server 304 responds by providing the requested data. The response of the server (e. g. HTTP-response) and the following packets are intercepted by the deep packet inspection component 306 and are forwarded to the flow size analyzer 308 in step 307. The flow size analyzer 308 determines an expected volume of the data to be transmitted.

As long as the data transmission is not authorized by the flow size analyzer 308, the incoming packets of the connection are cached. In the example shown in Fig. 3, the caching is performed in a separate network component depicted as a cache 309. Alternatively, the caching could also be done in the GGSN 303, for example.

After having determined the size of the data, the size information as well as further charging relevant data is given to the online charging system 311 in step 310. Based on these data, the online charging system 311 determines the expected costs for the requested service. The result of the cost calculation is given back to the flow size analyzer 308 in step 312, which forwards the result in step 313 to the GGSN 303. The GGSN 303 decides based on e.g. policies which data transmission behaviour is appropriate in the current situation or prompts the user of the mobile terminal 301 in step 314 to decide what to do.

If the available budget is sufficient, the requested data may be transmitted, wherein multiple options exist: The first option is that the data is transmitted using the classical online charging method and the transmission costs are charged accordingly. In the case that simultaneously further services are used, it may happen that the transmission cannot be completed, as their costs have not been incorporated into the initial cost calculation. Therefore, a second option exists, namely that the calculated transmission costs are reserved in the online charging system 311.

If it is determined that the existing budget is insufficient, at least three options exist: It may be decided that the data is not transmitted. In this case, no costs are incurred by the subscriber. A second option is to inform the subscriber about the exceeding of the limit. In this situation, the subscriber is given the possibility to increase his budget. As a third option, the subscriber is informed about the current situation and may decide to download a part of the data, e. g. some minutes of a video stream. If it is impossible to determine the size of the data, the transmission costs may be determined during the utilization of the service as known from the prior art.

The determination of the size of the data is dependent on the used application. In a preferred case, the size of the data is transmitted at the beginning of the transmission as a part of the transmission protocol. In this case, the control messages can be analyzed, and the required information may be extracted from the data stream.

If the information about the size of the data is not explicitly available, the server that provides the data may be requested to provide information about the size of the data. The information may be requested, for example, via an interface between the flow size analyzer 308 and the server 304 as depicted in Fig. 3 by the dotted arrow 320.

If it is not possible to directly determine the size of the data, the data may be first completely buffered in a buffer in the core network (depicted as a cache 309 in Fig. 3). To prevent denial-of-service attacks, certain precautionary measures may need to be taken. For example, it may be necessary to allow only a certain maximal number of unsuccessful loading attempts, before no buffering is carried out any more. Once the data is stored in the buffer, its size can be determined. If the budget is sufficient or the subscriber decides to either increase his budget or to partially download the data, the data is transmitted from the buffer in the core network to the mobile terminal 301.

The specification and drawings are to be regarded in an illustrative rather than a restrictive sense. It is evident that various modifications and changes may be made thereto, without departing from the scope of the invention as set forth in the claims. It is possible to combine the features described in the embodiments in a modified way, for providing additional embodiments that are optimized for a certain usage scenario. As far as such modifications are readily apparent for a person skilled in the art, these modifications shall be regarded as implicitly disclosed by the above described embodiments.

## Claims

1. Method for data transmission comprising the steps of
- determining data to be transmitted (101),
- providing size information relating to the size of said data (102),
- providing data transmission price information (103),
- providing a budget for data transmission (104),
- determining a relationship between said size information and said budget based on said data transmission price information (105, 106), and
- determining a data transmission behavior (107, 110, 111, 112) based on the determined relationship.

2. Method according to claim 1, **characterized by** the step of providing size information based on an analysis of a control message for controlling the transmission of data.

3. Method according to claim 1 or 2, **characterized in that** the step of providing size information comprises the step of requesting size information from a server providing the data to be transmitted.

4. Method according to at least one of the preceding claims, **characterized in that** the step of providing size information comprises the step of analyzing the data to be transmitted for determining size information.

5. Method according to at least one of the preceding claims, **characterized in that** the step of providing size information comprises the steps of
- transmitting said data to be transmitted to a buffer,
- buffering said data in said buffer, and
- analyzing the buffered data for determining size information.

6. Method according to at least one of the preceding claims, **characterized in that** the step of determining a relationship between said size information and said budget based on said data transmission price information is a step of determining whether the budget is sufficient to transmit said data.

7. Method according to claim 6, **characterized by** the steps of
- determining transmission costs (105) of said data based on said size information and said data transmission price information, and
- comparing said transmissions costs with said budget (106).

8. Method according to at least one of the preceding claims, **characterized by** the step of reserving at least a part of the budget for the transmission of said data (108).

9. Method according to at least one of the preceding claims, **characterized in that** the step of determining a data transmission behavior based on the determined relationship is a step of deciding to not transmit said data if the budget is not sufficient for transmitting said data.

10. Method according to at least one of the preceding claims, **characterized in that** the step of determining a data transmission behavior based on the determined relationship comprises the step of informing a user requesting said data to be transmitted about the determined relationship (110).

11. Method according to claim 10, **characterized by** the step of offering the user to increase his budget.

12. Method according to claim 10 or 11, **characterized by** the step of offering the user a partial transmission of said data.

13. System for data transmission comprising
- means for determining data to be transmitted (201),
- means for providing size information relating to the size of said data (202),
- means for providing data transmission price information (203),
- means for providing a budget for data transmission (204),
- means for determining a relationship between said size information and said budget based on said data transmission price information (205), and
- means for determining a data transmission behavior based on the determined relationship (206).

14. System according to claim 13, **characterized in that** the means for providing size information comprise means for providing size information based on an analysis of a control message for controlling the transmission of data.

15. System according to claim 13 or 14, **characterized in that** the means for providing size information comprise means for requesting size information from a server providing the data to be transmitted.

16. System according to at least one of the claims 13 to 15, **characterized in that** the means for providing size information comprise means for analyzing the data to be transmitted for determining size information.

17. System according to at least one of the claims 13 to 16, **characterized in that** the means for providing size information comprise
- means for transmitting said data to be transmitted to a buffer,
- means for buffering said data in said buffer, and
- means for analyzing the buffered data for determining size information.

18. System according to at least one of the claims 13 to 17, **characterized in that** the means for determining a relationship comprise means for determining whether the budget is sufficient to transmit said data.

19. System according to claim 18, **characterized in that** the means for determining a relationship comprise
- means for determining transmission costs of said data based on said size information and said data transmission price information, and
- means for comparing said transmissions costs with said budget.

20. System according to at least one of the claims 13 to 19, **characterized by** means for reserving at least a part of the budget for the transmission of said data.

21. System according to at least one of the claims 13 to 20, **characterized in that** the means for determining a data transmission behavior comprise means for deciding to not transmit said data if the budget is not sufficient for transmitting said data.

22. System according to at least one of the claims 13 to 21, **characterized in that** the means for determining a data transmission behavior comprise means for informing a user requesting said data to be transmitted about the determined relationship.

23. System according to claim 22, **characterized in that** the means for determining a data transmission behavior comprise means for offering the user to increase his budget.

24. System according to claim 22 or 23, **characterized in that** the means for determining a data transmission behavior comprise means for offering the user a partial transmission of said data.

25. A computer program product comprising a computer readable medium and a computer program recorded therein in form of a series of state elements corresponding to instructions which are adapted to be processed by a data processing means of a data processing apparatus such that a method according to at least one of the claims 1 to 12 is performed or a system according to at least one of the claims 13 to 24 is formed on the data processing means.
